# EUROPEAN PATENT SPECIFICATION

(11) **EP 3 966 010 B1**
(45) Date of publication and mention of the grant of the patent: **26.11.2025**
(21) Application number: 19723410.7
(22) Date of filing: 10.05.2019
(51) Int. Cl.: B29B 17/02, B29B 17/04, B29B 17/00, B29L 31/00

(54) **METHOD AND DEVICE FOR RECYCLING POLYMERS FROM WASTE MATERIAL**
VERFAHREN UND VORRICHTUNG ZUM RECYCLING VON POLYMEREN AUS ABFALLMATERIAL
PROCÉDÉ ET DISPOSITIF DE RECYCLAGE DE POLYMÈRES À PARTIR DE DÉCHETS

(43) Date of publication of application: 16.03.2022
(73) Proprietor: Matco Plastics NV, 8710 Wielsbeke (BE)
(72) Inventor: VANDE VYVERE, Steven, 8710 Wielsbeke (BE)
(74) Representative: Brantsandpatents bv
(86) International application number: PCT/EP2019/062052
(87) International publication number: WO 2020/228925

(56) References cited:
- DE-A1- 10 149 515
- JP-A- H0 760 746
- KR-A- 20110 066 349
- KR-B1- 101 488 150
- DATABASE WPI Week 201202, Derwent World Patents Index; AN 2011-J31588, XP002792440

## Description

### FIELD OF THE INVENTION

The present invention relates to a method and a device for recycling waste material comprising a polymer and a sheet material adhered to said polymer, wherein said polymer and sheet material will be separated.

### BACKGROUND

With the wide use of plastic materials, such as polyethylene, that are used in conjunction with a variety of different types of paper fibers, aluminum foils or other contaminants, a large amount of commingled plastic and fiber waste is produced on an annual basis throughout the world. Such waste materials include agricultural film, material from paper recycling plants and post-consumer plastic such as grocery and garbage bags.

The separation of contaminants from such plastic materials is often difficult because the materials are contaminated with types of fibers that are similar in size and weight to the plastic sought to be reclaimed. Thus, a number of apparatus and methods have been developed for the reclamation of plastic from such materials.

One of the most common methods of reclaiming plastic that has been contaminated with fibers is through the use of a water tank in which the contaminated plastic is placed. Because paper fibers readily absorb water they tend to sink in the tanks whereas the polyethylene plastic scrap will float and can be skimmed from the top. However, such water tank processes suffer from the disadvantage of relatively high operating costs necessitated by the use of the water separation tanks or related equipment and the time involved in performing them.

US 743 824 4 and EP 237 150 8 have recognized these difficulties and provide a method and apparatus for separating polymer waste material from various types of contaminants, like paper, foil, etc. using a dry recycling system.

The method of US '244 comprises grinding, separating by a turbulent flow of air, separating by means of a cyclone in combination with densification and agglomeration.

The method for recycling according to EP '508 comprises grinding, separating by means of a cyclone and sieve in combination with melting, filtering and granulating the isolated polymer particles
Although such methods seem to be an improvement from the use of water separation tanks, the efficiency and effectiveness of the disclosed methods and apparatus appears to be less than desired. Furthermore, the disclosed methods do not facilitate high purity of the isolated polymer particles. Even more, EP 508 discloses a method wherein the light particle fraction, a residual fraction with mainly non-polymer particles and a minor amount of polymer particles, is sorted to maximally isolate the polymer particles. Thereby enhancing the yield of the polymer particles on one hand, but diminishing the quality of the polymer particles on the other hand as the chance of contamination with non-polymer particles is greater. KR20110066349A, JPH0760746A, DE10149515A1 and KR101488150B1 relate to recycling plastic from a (layered) material. None of these documents disclose an electrostatic separation step or a specific (peripheral) operating speed of a hammer mill. Moreover, KR20110066349A and KR101488150B1 do not disclose the use of a melt-filtration.

Accordingly, the present invention aims to resolve the problems and disadvantages mentioned above.

### SUMMARY OF THE INVENTION

The present invention provides a method for recycling waste material comprising a polymer and a sheet material adhered to said polymer, wherein said polymer and sheet material will be separated according to claim 1.

A further embodiment of the invention comprises a processing step using a generated air flow and / or air turbulence, thus enhancing separation efficiency.

A further embodiment of the invention is the treatment of the waste material by using a hammer mill.

In a further embodiment of the invention the waste material is ground to a specific particle size. Preferably the particle size is 0,5 to 14 mm, more preferably 0,5 to 12 mm. These particle sizes have shown to yield the most efficient separation and also show the most potential for reuse purposes.

In a further embodiment of the invention, separation is further enhanced by applying a corona electrode. As aluminum is a non-ferrous metal, separation of aluminum from other non-conductive materials can be improved by applying a corona charge to the mixture, whereby the aluminum fraction can be more efficiently withheld.

Preferred embodiments of the method are shown in any of the claims 2 to 10.

In a second aspect, the present invention relates to an apparatus for recycling waste material comprising a polymer and a sheet material adhered to said polymer according to claim 11.

More particular, the apparatus as described herein comprises multiple components which results in a far more efficient separation and purity of the reusable polymers.

Preferred embodiments of the apparatus are shown in any of the claims 12 and 13.

### DESCRIPTION OF FIGURES

The following description of the figure of specific embodiments of the invention is merely exemplary in nature and is not intended to limit the present teachings, their application or uses. Throughout the drawings, corresponding reference numerals indicate like or corresponding parts and features.

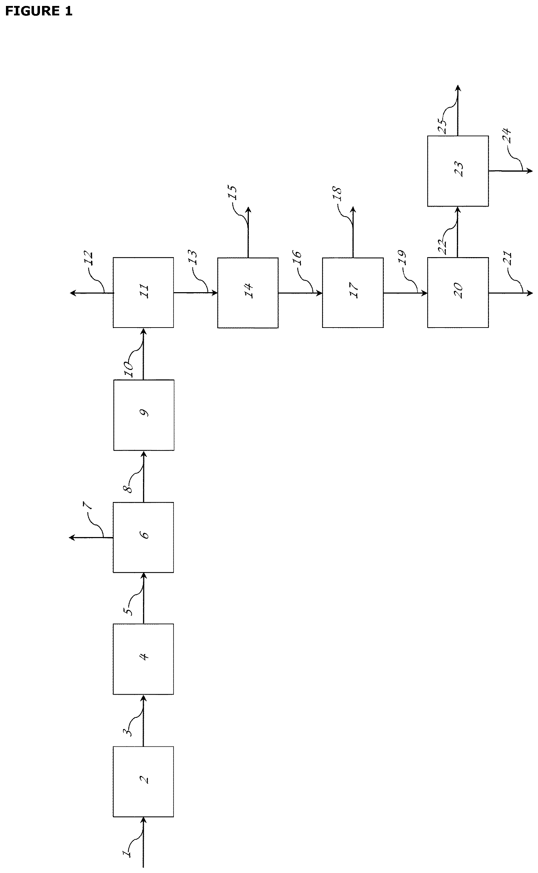

**Figure 1** shows a schematic overview of a polymer recycling process.

The following numbering refers to: (1) waste material; (2) shredder; (3) shred material; (4) grinder; (5) ground material; (6) first wind sifter; (7) non-polymer material; (8) polymer material; (9) hammer mill; (10) polymer material; (11) sieve; (12) polymer material with a desired particle size; (13) polymer material with an undesired particle size; (14) densimetric separator; (15) lightweight non-polymer material; (16) heavy polymer material; (17) second wind sifter; (18) non-polymer material; (19) polymer material; (20) electrostatic separator; (21) aluminium material; (22) polymer material; (23) extruder with a filter; (24) miniscule non-polymer material; (25) high purity reusable polymer pellets.

Waste material (1) comprising polymer and sheet material adhere to said polymer material is provided to a shredder (2). The waste material is homogenized in particle size by a shredder (2), resulting in shred material (3), and a grinder with a built-in sieve (4), resulting in ground material (5) with particle size smaller than 15 mm. The ground material is fed into a first wind sifter (6), which will facilitate a first mechanical separation of the non-polymer (7) and polymer (8) material. The non-polymer material is discarded from the recycling process, whereas the polymer material is further manipulated to gain a polymer fraction with a negligible amount of non-polymer particles. The polymer material (8) still contains a large fraction of non-polymer material fully or partially adhered to said polymer material. The hammer mill (9) manipulates the polymer material (8) to detach the adhering non-polymer particles, resulting in polymer material (10) by which the non-polymer material adhered to the polymer material is mainly detached. with detached fraction non-polymer material detached. The polymer material (10) is distributed onto a sieve (11), whereby said sieve (11) sorts the particles by size and whereby the particles with a size between 0.5 and 12 mm (13) are selected for further processing. Particles (12) with a size smaller than or greater than the selected ones are discarded from the recycling process. The particles (13) with a size between 0.5 and 12 mm arranged on the densimetric separator (14), separating the particles (13) by density. The lightweight particles (15) are separated from the more heavy particles (16) by the densimetric separator (14). The lightweight particles (15) comprising mainly non-polymer material are discarded from the recycling process. The heavy particles (16) consisting of mainly polymer material with a small fraction of non-polymer material are fed to a second wind sifter (17), to isolate the small fraction of non-polymer material (18) from the polymer material. The resulting polymer material (19) resulting from the second wind sifter contains only minor amounts of non-polymer material compared to the polymer material (16) fed to the second wind sifter (17). An electric separator (20) is applied, if necessary, to isolate the aluminum fraction (21), a non-polymer material, from the polymer material (19), resulting in a fraction of polymer material with an even higher purity (22). The polymer material (22) contains minor amounts of non-polymer material of miniscule size (24), which will be restrained in the extruder (23) by filtering the melted polymer with filter having a filter size between 50 and 200 micron. The produced polymer pellets (25) result in a high purity, more particular a purity of near virgin plastic's quality, suitable for reuse in film blowing processes.

### DETAILED DESCRIPTION OF THE INVENTION

The present invention concerns a method and a device for recycling waste material comprising a polymer and a sheet material adhered to said polymer.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In a first aspect the invention provides a method for recycling waste material comprising a polymer and a sheet material adhered to said polymer, wherein said polymer and sheet material during said method are separated, and reusable polymer pellets are obtained, said method comprises the following steps: a) grinding the waste material; b) mechanical treatment of the ground material by means a hammer mill, thereby generating a sheet material fraction and a polymer fraction; c) separating of the polymer fraction from the sheet material fraction by means of sieving, gravity, a generated air flow, or a combination thereof; d) extruding said polymer fraction into reusable polymer pellets of at least 95 % purity, wherein extrusion is preceded by a continuous polymer melt filtration step, wherein said melted polymer is filtered with a mesh screen with a filtering size from 50 to 200 micron.

The waste material mainly consists of packaging waste from packages of dairy products. Recycling the packaging of dairy products, like milk and yogurt containers, has enormous benefits for the environment. Not only are materials diverted from landfill when we recycle, but we also save natural resources and reduce our environmental impact. Yoghurt packaging are mainly made from thermoformable polypropylene (PP) or rigid polystyrene (PS), which can be reused and reprocessed into polymer pellets for recycling. Plastic milk bottles are made from high-density polyethylene (HDPE). Recycled HDPE plastics cannot be used to make recycled food packaging because its low melting point means that bacterial contamination is possible. However, the recycled HDPE pellets can be mixed with new polymer pellets and made into containers for non-food products like detergent and shampoo.

The advantage of this separation process lays in the fact that it is a dry process, resulting in a simple process with a high yield, which is moreover completely automated and thus very fast and efficient in comparison to other known processes. Moreover, the process provided by the first aspect of the current invention has the advantage of issuing polymer materials with high purity exemplary for reuse and reprocess in the plastics industry. Said polymer materials almost achieve 100 % of the mechanical properties of the virgin plastics, which have never been used or reprocessed before as there are produced directly form the petrochemical feedstock.

In a preferred embodiment the particle size of said ground material after grinding step a) is smaller than 15 mm, more preferably between 8 to 15 mm, even more preferably between 10 to 12 mm.

The invention is intended for recycling waste material comprising a polymer and a sheet material adhered, or at least partially, to said polymer originating from the production and use of plastic packaging, like yoghurt packaging or other dairy packaging products.

Such waste material consists mainly of polymers, like polystyrene or polypropylene, with small amounts of aluminum from cover foils, paper and other non-polymer materials from cover films or from decorative layers, labels, etc. These small amounts are mainly adhered to the polymers and are considered to be contaminants in the recycling process of polymers. Each step of the recycling process enables the separation of the polymer fraction from the non-polymer fraction by mainly mechanical manipulation.

Prior to step a) the waste material is first shredded as to homogenize the material size to be treated in the following steps. In a continuous flow the waste material is fed to the shredder. The waste material is pushed towards a rotor with knives in a single row or up to four rows, resulting in a homogenous output. The resulting waste material after shredding, called shred material, has a material size of about 5 cm.

Preferably the shred material is transported by a transport belt to a grinder. Said shred material could exemplary also be collected in big bags and transported to a grinder.

The grinder further homogenizes the shred material to an appropriate particle size by cutting the shred material with knives, which are aligned on a rotor, resulting in ground waste. The appropriate size of the ground waste is determined by the subsequent sieve with a mesh size of preferably 15 mm. As a non-limitative example, particles with a size of about 12 mm will be discharged from the grinder by gravity as the particles are smaller than the 15 mm openings of the mesh screen. Particles with a size of about 18 mm cannot be discharged because of their size and will be further grinded until a size smaller than the openings in the mesh screen is achieved. Preferably the mesh size of the sieve is 14 mm. In a non-limitative example, the particles with a size range of about 10 to 12 mm are discharged from the grinder by gravity and are collected by an aspirator in big bags for easy storage and transport of the ground material.

The inventors have found that the particle size range as described above is particularly useful for the effective separation of the polymer fraction from the sheet material fraction.

The ground material after step a) comprises a mix of two fractions: a polymer fraction and a sheet material fraction. The latter fraction is considered to be a contaminating fraction. The polymer fraction comprises polymers with and without adhering sheet materials. Said fraction is step-by-step treated to result in a final polymer fraction and a final sheet material fraction, wherein said final polymer fraction has a negligible amount of polymers with adhered sheet material. The succeeding steps b) and c) are designed to mechanically loosen the adhered sheet material from the polymers and to separate the polymer fraction from the sheet material fraction. The final step d) is designed to maximally remove the remaining contamination fraction.

The two fractions of the ground material after step a) are preferably mechanically separated before the mechanical treatment of step b) to achieve a higher yield and obtain a higher purity. The mechanical separation of the ground material comprises a wind sifter. Preferably the wind sifter is a zigzag sifter. The ground material is fed into a sorting channel, which has a zigzag configuration. The ground material is distributed through the entire cross-section of the channel. The generated air flow flows through the sorting channel from the bottom to the top, which causes the ground material to be flooded by air and separated. Said material must cross through the generated air flow at every bend in the sorting channel and subsequently collides against the wall of the channel. The collision causes the material with a higher density to drop to the bottom of the sorting channel due to gravitational force. The lightweight material is sucked out of the sorting channel via the upwards-directed air flow. The mechanical separation of the ground material by the wind sifter results in a first separation of the polymer and non-polymer fraction.

In another preferred embodiment step b) is performed with a peripheral speed of at least 75 m/sec, more preferably the peripheral speed is at least 80 m/sec, more preferably the peripheral speed is at least 90 m/sec, most preferably the peripheral speed is between 90 and 110 m/sec.

In step b) the ground waste is milled by a combination of repeated hammer impacts, collisions with the walls of the milling chamber, and particle on particle impacts. Due to mainly frictional or deformation forces, the hammer mill, detaches the sheet material from the polymers. Perforated metal screens or bar grates covering the discharge opening of the hammer mill retains coarse material for further milling, while allowing properly sized materials to pass. The discharge can be by means of gravity or pneumatic.

The effective and efficient separation of the polymer fraction and the sheet material fraction in the following steps is predominantly enabled by the hammer mill. Said hammer mill detaches the polymers' adhered sheet material, being an integral part of the method. In addition, the thermal energy generated by a frictional force caused by the impact of the hammers on the particles is exploited during the recycling process, making the recycling process a more cost efficient process.

Adequate selection of the operating parameters for a hammer mill maximizes the efficiency and enhances the uniformness of the material. The peripheral speed, the sieve configuration (standard or reverse perforation) and screen size, the hammer configuration and thickness should be taken into account.

Crushing hammers are aligned on an axe attached to the rotor. Preferably the rotor comprises six axis. The rotor of the hammer mill rotates at a high speed that varies from 1200 to 3600 rpm, and rotates either clockwise or anti-clockwise. Preferably the rotor rotates at a speed between 1400 and 3500 rpm, more preferably between 1800 and 3400 rpm, more preferably between 2200 and 3300 rpm, more preferably between 2600 and 3250 rpm, more preferably between 2700 to 3200 rpm, more preferably between 2850 and 3150 rpm, more preferably between 2900 and 3100 rpm.

The particle size of the output material of the hammer mill depends on the type of screen mesh screen. Because the end particle size of the milled waste is determined by the screen size used on the mill, it is possible to use very small screens to attempt to get smaller particles. However, smaller screens are weaker and tend to break easily, which adds to equipment costs and ruins batches due to contamination. In addition, smaller screens have the tendency to easily clog. On the other hand, using screens with a bigger screen size, leads to inefficient milling as the particles are to quickly discharged. Preferably the particle size of the milled waste is smaller than 12 mm, more preferably smaller than 10 mm, more preferably with a size range of about 4 to 10 mm.

Hammer mills can be provided with "hard" or "soft" hammers. Hard hammers are blunt and impact the material with a flat surface in order to smash the particle, leading to a detachment of the sheet material from the polymer material. Soft hammers use sharp, knife-like edges to cut the material, and are not as effective as hard hammers to detach unwanted materials. Preferably the hammers of the hammer mill are hard hammers.

It was found that the use of a peripheral speed of at least 75 m/sec in combination with the above mentioned operating parameters leads to the best results, regarding the detachment of the sheet material from the polymer material, which is the main purpose of this mechanical treatment.

This embodiment of current invention enables the subsequent separating step to maximally isolate the polymer material from the sheet material fraction.

In a preferred embodiment step c) comprises the substeps of first separating by sieving and secondly separating by gravity and a generated air flow.

The resulting polymer material and sheet material of step b) is mechanically separated. The particles are first mechanically separated by a configuration of different sieves. The sieves have a range of different aperture sizes, whereby some are smaller than the nominal and some are larger. During sieving the material is subjected to a horizontal, circular movement The probability of a particle passing through the sieve mesh is determined by the ratio of the particle size to the sieve openings, the orientation of the particle and the number of encounters between the particle and the mesh openings. Dry sieving is the preferred method for the size range between 40 µm and 125 mm. However, contrary to what one might expect, the major part of the relatively small particles of the sheet material fraction do not fall through the first sieve, although the particles are small enough. Said particles have the tendency to easily agglomerate as a result of the mechanical treatment in step b) and thus in fact agglomerate with each other on the first sieve. A small amount of the particles of the sheet material fraction fall through the first and following sieves and cannot be separated from the polymer material by sieving.

The following mechanical separation is based on the difference in density of the particles, separating the heavy particles from the lighter particles by means of a densimetric separator. The densimetric separator combines an air flow crossing the table with an vibrating movement of the table to efficiently and effectively separate the material. In addition the table is inclined. Preferably the inclination angle of the table is minimal 5 degrees and maximally 26 degrees, more preferably between 8 and 16 degrees. The generated air flow fluidizes the particles of lower density, enabling the particles to float and slide down the slope toward the bottom. The particles with a higher density are transported towards the top of the table by the vibrant movement.

Most of the particles with a higher density are polymer particles. Yet, the polymer particles are still contaminated with a fraction of non-polymer particles and a subsequent separation step is needed to gain a highly purified polymer fraction.

Also the following mechanical separation is based on the density of the particles. The particles of the polymer fraction, being mainly heavy particles, and sheet material fraction, being mainly lightweight particles, are separated by means of gravity and a generated air flow by use of a wind sifter. The velocity, flow rate and shape are adapted to ensure the sorting of the particles. The wind sifter offers effective separation, with high efficiency of up to 99 %. A continuous generated air flow in the opposite direction of the particle stream reverses the momentum of most of the light particles and propels them to the top of the wind sifter, where they are discharged from the process. The heavy particles are not affected by the generated air flow and fall under the influence of gravity. The heavy particles are collected at the bottom of the wind sifter.

Preferably, the air molecules of the generated air flow are ionized to allow an even more efficient isolation of the lightweight particles from the heavy particles.

In a preferred embodiment the obtained polymer fraction after step c) has a particle size of between 0,1 to 14 mm, more preferably between 0,5 to 12 mm.

The arrangement of sieve, densimetric table and wind sifter are designed that particles with a distinct particle size are separated resulting in a higher yield and a higher resulting purity.

Air speeds need to be carefully regulated in order to obtain a high separation yield. By applying said air flow and / or air turbulence, the separation of the polymer fraction from the sheet material fraction occurs in a faster and more reliable way. More specifically the air flow is able to blow the sheet material fraction out of the wind sifter, whilst the polymer fraction can fall through e.g. a mesh-like structure, thus catching the sheet material and polymer fractions in separate containers.

By preference vacuum conditions are used to enhance the separation of the sheet material fraction from the polymer fraction. By combining a generated air flow and vacuum conditions during separation, the lighter sheet material fraction is blown and suck out of the mixture, while the heavier polymer fraction can fall by means of gravity, thus improving the separation speed and efficiency.

The final mechanical separation of the polymer fraction from the sheet material fraction by means of a wind sifter already succeeds in a high yield and high purity of the polymer fraction.

The purified polymer fraction with a near virgin quality is further processed by extrusion, wherein said fraction is melted and extruded into polymer pellets.

In a preferred embodiment the melted polymer is filtered by a filter. Said filter comprises preferably a mesh screen with a filter size from 50 to 150 micron, more preferably from 50 to 100 micron, even more preferable from 50 to 80 micron, most preferably at 80 micron.

The removal of the remaining contaminating fraction is established during the extrusion process by means of a filter. Preferably the filter is self-cleaning to reduce the blinding and plugging said filter. It was found that a filter size from 50 to 150 micron allows for effective removal of the particles from the contamination fraction and a prolonged filter lifetime. Filter replacement is costly, often requiring that the entire line be taken out of production, and needs to be avoided as well as possible.

Once the achieved polymer fraction is separated from the achieved sheet material fraction and has a negligible amount of polymers with adhered sheet material, the polymer particles from the polymer fraction are melted and extruded to obtain polymer pellets which can be further used in downstream applications. The crystalline melting temperature depends on the physical properties of the polymer, as the polymer goes through a transition from a crystalline or semi-crystalline phase to a solid amorphous phase. The viscous liquid obtained is filtered through several grid levels.

In a preferred embodiment an electrostatic separation is performed before extrusion.

The dry separation process is further enhanced by performing an electrostatic separation on the polymer fraction before extrusion. Metal particles with a particle size smaller than 15 mm, preferably smaller than smaller than 12 mm, more preferably smaller than 10 mm, most preferably between 100 µm to 8 mm can be separated from the polymer fraction. In a non-limitative example, the polymer fraction is introduced via a vibrating conveyor to a rotating earthed metal drum and transported to the area of a corona electrode. Conductive material, like aluminum, discharge very quickly when they come in contact with the metal drum and are ejected by the rotating movement. The non-conductive materials, like polymer or paper, loose their charge only very slowly, remain adhered to the surface of the metal drum and are finally collected. Another non-limitative examples separates aluminum particles, originating from the sheet material fraction, from the polymer fraction by applying an eddy current before, during or after the separation. By applying an eddy current the aluminum fraction is temporarily magnetized and repelled by the non-ferrous separator, thus separated from the inert polymer fraction, which does not respond to the eddy current. Furthermore an electrostatic separator can also be implemented in the process to separate polymer fraction into pure sorted fraction by using the tribo-electric behavior of the different polymers.

By applying an electrostatic separation the aluminum can be more efficiently withheld from the contaminating sheet material fraction. The removal of aluminum before extrusion also reduces the risk of filters getting clogged by retaining the aluminum from the molten polymer.

In a particularly preferred embodiment the obtained polymer pellets have a purity of at least 99 %, more preferably at least 99.5 %, even more preferably at least 99.9 %.

The reuse of polymers for agricultural, horticultural industry, etc. requires a high purity of at least 99 %. A higher purity of at least 99.5 % is required for reuse of polymers in circulating systems as virgin plastics. Combining all of the above characteristics yields a dry separation method that meets all required specifications to efficiently obtain polymer pellets of said high purity. Because of the polymers high percentage of purity, these polymers are ideal for film blowing purposes. The method of current invention enables the recovery of polymers from waste, which can be reused and / or reprocessed to form new products. The reuse and reprocessing of polymers minimizes the amount of plastic waste and contributes to a sustainable recycling.

In a preferred embodiment of the invention said polymers pellets are selected from the group comprising polyethylene terephthalate (PET), high-density polyethylene (HDPE), medium-density polyethylene (MDPE), polyvinyl chloride (PVC), low-density polyethylene (LDPE), polypropylene (PP), polystyrene (PS), thermoplastic polyurethanes (TPU), polyamide (PA), polycarbonate (PC), and other equivalents.

The polymer pellets are preferably thermoplastic. Thermoplastics become pliable or moldable above a specific temperature and solidifies upon cooling. Because they can be reshaped by heating, they are typically used to produce parts by various polymer processing techniques such as injection molding, compression molding, and extrusion.

A second aspect of the invention provides an apparatus for recycling waste material comprising a polymer and a sheet material adhered to said polymer, wherein said apparatus comprises at least the following components: a grinder for grinding said waste material, a hammer mill for receiving ground material of a said waste material; at least one sieve, densimetric separator and / or wind sifter, enabling the separation of a sheet material fraction and a polymer fraction; and an extrusion device comprising a continuous polymer melt filtration device, having a filter size of between 50 and 200 micron. Said apparatus enables a high yield and purity the resulting polymer pellets.

In a preferred embodiment of the invention, said apparatus comprises an electrostatic separator, positioned ahead of the extrusion device. The electrostatic separator will isolate the aluminum, one of the contaminants of the polymer fraction, by applying an corona charging. And said apparatus will enable more pure separated polymer pellets.

In another preferred embodiment the wind sifter is used before the hammer mill, and said hammer mill is followed by a sieve, a densimetric separator and a second wind sifter. Said combination of multiple apparatus for mechanical separation enables a more efficient and effective recycling of the polymer fraction, as said fraction is maximally separated from the contaminating sheet material fraction. Resulting in an even higher yield and purity of the resulting polymer pellets.

The invention is further described by the following non-limiting examples which further illustrate the invention, and are not intended to, nor should they be interpreted to, limit the scope of the invention.

## Claims

1. A method for recycling waste material comprising a polymer and a sheet material adhered to said polymer, wherein said polymer and sheet material during said method are separated, and reusable polymer pellets are obtained, **characterized in that** said method comprises the following steps:
a. grinding the waste material;
b. mechanical treatment of the ground material by means of a hammer mill, performed with a peripheral speed of at least 75 m/sec, thereby generating a sheet material fraction and a polymer fraction;
c. separating of the polymer fraction from the sheet material fraction by means of sieving or gravity, a generated air flow, or a combination thereof;
d. extruding said polymer fraction into reusable polymer pellets of at least 95 % purity, wherein extrusion is preceded by a continuous polymer melt filtration step, wherein said melted polymer is filtered with a mesh screen with a filtering size from 50 to 200 micron, and wherein an electrostatic separation is performed before extrusion.

2. Method according to claim 1, **characterized in that** the particle size of said ground material after grinding step a) is smaller than 15 mm.

3. Method according to one of the preceding claims 1-2, **characterized in that** the melted polymer is filtered with a mesh screen with a filter size from 50 to 150 micron.

4. Method according to one of the preceding claims 1-3, **characterized in that** step c) comprises the substeps of first separating by sieving and secondly separating by gravity and a generated air flow.

5. Method according to one of the preceding claims 1-4, **characterized in that** the obtained polymer fraction after step c) has a particle size of between 0,1 to 14 mm.

6. Method according to one of the preceding claims 1-5, **characterized in** the obtained polymer pellets have a purity of at least 99 %.

7. Method according to claim 6, **characterized in that** said polymers pellets are selected from the group comprising polyethylene terephthalate (PET), high-density polyethylene (HDPE), medium-density polyethylene (MDPE), polyvinyl chloride (PVC), low-density polyethylene (LDPE), polypropylene (PP), polystyrene (PS), thermoplastic polyurethanes (TPU), polyamide (PA), polycarbonate (PC), and other equivalents.

8. An apparatus for recycling waste material comprising a polymer and a sheet material adhered to said polymer, wherein said apparatus comprises at least the following components: a grinder for grinding said waste material, a hammer mill for receiving ground material of said waste material; at least one sieve, densimetric separator and / or wind sifter, enabling the separation of a sheet material fraction and a polymer fraction obtained from said hammer mill; and an extrusion device for extruding the sieved polymer fraction comprising a continuous polymer melt filtration device, have a filter size of between 50 and 200 micron, **characterized in that** the apparatus further comprises an electrostatic separator, positioned ahead of the extrusion device.

9. An apparatus according to claim 8, **characterized in that** a wind sifter is positioned upstream from said hammer mill, and said hammer mill is followed by a sieve, a densimetric separator and another wind sifter.

## Patentansprüche

1. Ein Verfahren zum Recyceln von Abfallmaterial, das ein Polymer- und ein an dem Polymer haftendes Bahnmaterial umfasst, wobei das Polymer und das Bahnmaterial während des Verfahrens getrennt werden und wiederverwendbare Polymerpellets gewonnen werden, **dadurch gekennzeichnet, dass** das Verfahren die folgenden Schritte umfasst:
a. Mahlen des Abfallmaterials,
b. mechanisches Behandeln des Mahlguts mittels einer Hammermühle, durchgeführt mit einer Umfangsgeschwindigkeit von mindestens 75 m/s, wodurch eine Bahnmaterialfraktion und eine Polymerfraktion erzeugt wird,
c. Trennen der Polymerfraktion von der Bahnmaterialfraktion mittels Sieben oder Schwerkraft, eines erzeugten Luftstroms oder einer Kombination daraus,
d. Extrudieren der Polymerfraktion zu wiederverwendbaren Polymerpellets mit einer Reinheit von mindestens 95 %, wobei der Extrusion ein Schritt des kontinuierlichen Filterns der Polymerschmelze vorausgeht, wobei das geschmolzene Polymer mit einem Maschensieb mit einer Filtergröße von 50 bis 200 Mikrometern gefiltert wird und wobei vor der Extrusion eine elektrostatische Trennung durchgeführt wird.

2. Verfahren nach Anspruch 1, **dadurch gekennzeichnet, dass** die Partikelgröße des Mahlguts nach dem Mahlen in Schritt a) kleiner als 15 mm ist.

3. Verfahren nach einem der vorhergehenden Ansprüche 1 bis 2, **dadurch gekennzeichnet, dass** das geschmolzene Polymer mit einem Maschensieb mit einer Filtergröße von 50 bis 150 Mikrometern gefiltert wird.

4. Verfahren nach einem der vorhergehenden Ansprüche 1 bis 3, **dadurch gekennzeichnet, dass** Schritt c) die Teilschritte von erstens Trennen durch Sieben und zweitens Trennen durch Schwerkraft und einen erzeugten Luftstrom umfasst.

5. Verfahren nach einem der vorhergehenden Ansprüche 1 bis 4, **dadurch gekennzeichnet, dass** die gewonnene Polymerfraktion nach Schritt c) eine Partikelgröße zwischen 0,1 und 14 mm aufweist.

6. Verfahren nach einem der vorhergehenden Ansprüche 1 bis 5, **dadurch gekennzeichnet, dass** die gewonnenen Polymerpellets eine Reinheit von mindestens 99 % aufweisen.

7. Verfahren nach Anspruch 6, **dadurch gekennzeichnet, dass** die Polymerpellets aus der Gruppe ausgewählt sind, die Polyethylenterephthalat (PET), Polyethylen mit hoher Dichte (HDPE), Polyethylen mit mittlerer Dichte (MDPE), Polyvinylchlorid (PVC), Polyethylen mit geringer Dichte (LDPE), Polypropylen (PP), Polystyrol (PS), thermoplastische Polyurethane (TPU), Polyamid (PA), Polycarbonat (PC) und deren Äquivalente umfasst.

8. Eine Vorrichtung zum Recyceln von Abfallmaterial, das ein Polymer- und ein an dem Polymer haftendes Bahnmaterial umfasst, wobei die Vorrichtung mindestens die folgenden Komponenten umfasst: eine Mühle zum Mahlen des Abfallmaterials, eine Hammermühle zum Aufnehmen von Mahlgut aus dem Abfallmaterial, mindestens ein Sieb, eine dichtemessende Trenneinrichtung und/oder einen Windsichter, die das Trennen einer Bahnmaterialfraktion und einer Polymerfraktion, die in der Hammermühle gewonnen werden, ermöglichen, und eine Extrusionseinrichtung zum Extrudieren der gesiebten Polymerfraktion, die eine Einrichtung zum kontinuierlichen Filtern der Polymerschmelze mit einer Filtergröße zwischen 50 und 200 Mikrometer umfasst, **dadurch gekennzeichnet, dass** die Vorrichtung ferner eine Einrichtung zum elektrostatischen Trennen umfasst, die vor der Extrusionseinrichtung positioniert ist.

9. Eine Vorrichtung nach Anspruch 8, **dadurch gekennzeichnet, dass** prozessaufwärts der Hammermühle ein Windsichter positioniert ist und der Hammermühle ein Sieb, eine dichtemessende Trenneinrichtung und ein weiterer Windsichter folgt.

## Revendications

1. Un procédé permettant de recycler des déchets comprenant un polymère et un matériau en feuille adhérant audit polymère, dans lequel lesdits polymère et matériau en feuille sont séparés au cours dudit procédé, et des granulés de polymère réutilisables sont obtenus, **caractérisé en ce que** ledit procédé comprend les étapes suivantes:
a. le broyage des déchets;
b. le traitement mécanique du matériau broyé au moyen d'un broyeur à marteaux, effectué à une vitesse périphérique d'au moins 75m/sec, générant ainsi une fraction de matériau en feuille et une fraction de polymère;
c. la séparation de la fraction de polymère de la fraction matériau en feuille par tamisage ou gravité, par un flux d'air généré, ou par une combinaison de ceux-ci;
d. l'extrusion de ladite fraction de polymère en granulés de polymère réutilisables d'une pureté d'au moins 95%, dans lequel l'extrusion est précédée d'une étape de filtration continue du polymère fondu, dans lequel ledit polymère fondu est filtré à l'aide d'un tamis dont la taille de filtration est comprise entre 50 et 200 microns, et dans lequel une séparation électrostatique est effectuée avant l'extrusion.

2. Procédé selon la revendication 1, **caractérisé en ce que** la taille des particules du matériau broyé après l'étape de broyage a) est inférieure à 15 mm.

3. Procédé selon l'une des revendications précédentes 1-2, **caractérisé en ce que** le polymère fondu est filtré à l'aide d'un tamis d'une taille de 50 à 150 microns.

4. Procédé selon l'une des revendications précédentes 1 à 3, **caractérisée en ce que** l'étape c) comprend les sous-étapes de premièrement, séparation par tamisage et deuxièmement, séparations par gravité et par un flux d'air généré.

5. Procédé selon l'une des revendications précédentes 1 à 4, **caractérisé en ce que** la fraction de polymère obtenue après l'étape c) a une taille de particule comprise entre 0,1 et 14 mm.

6. Procédé selon l'une des revendications précédentes 1 à 5, **caractérisé en ce que** les granulés de polymère obtenus ont une pureté d'au moins 99 %.

7. Procédé selon la revendication 6, **caractérisé en ce que** lesdits granulés de polymères sont choisis dans le groupe comprenant le polyéthylène téréphtalate (PET), le polyéthylène haute densité (PEHD), le polyéthylène moyenne densité (PEMD), le polychlorure de vinyle (PVC), le polyéthylène basse densité (PEBD), le polypropylène (PP), le polystyrène (PS), les polyuréthanes thermoplastiques (TPU), le polyamide (PA), le polycarbonate (PC), et d'autres équivalents.

8. Un appareil permettant de recycler des déchets comprenant un polymère et un matériau en feuille adhérant audit polymère, dans lequel ledit appareil comprend au moins les composants suivants: un broyeur pour broyer lesdits déchets, un broyeur à marteaux pour recevoir le matériau broyé desdits déchets; au moins un tamis, un séparateur densimétrique et/ou un séparateur pneumatique, permettant la séparation d'une fraction de matériau en feuille et d'une fraction de polymère obtenues à partir dudit broyeur à marteaux; et un dispositif d'extrusion pour extruder la fraction de polymère tamisée comprenant un dispositif de filtration continue du polymère fondu, ayant une taille de filtre comprise entre 50 et 200 microns, **caractérisé en ce que** l'appareil comprend en outre un séparateur électrostatique, placé en amont du dispositif d'extrusion.

9. Un appareil selon la revendication 8, **caractérisé en ce qu'**un séparateur pneumatique est placé en amont dudit broyeur à marteaux, et ledit broyeur à marteaux est suivi d'un tamis, d'un séparateur densimétrique et d'un autre séparateur pneumatique.
